# EUROPEAN PATENT APPLICATION

(11) **EP 1 298 842 A1**
(43) Date of publication of application: **02.04.2003**
(21) Application number: 01308338.1
(22) Date of filing: 28.09.2001
(51) Int. Cl.: H04L 12/24, H04L 29/06

(54) **Method and device for network device configuration**

(71) Applicant: BRITISH TELECOMMUNICATIONS public limited company, London EC1A 7AJ (GB)
(72) Inventor: The designation of the inventor has not yet been filed
(74) Representative: Maggs, Michael Norman

(57) **Abstract**

A system for configuring network devices on a computer network, which has particular applications in a hot-desking office environment, maintains within a database (110) not only the IT infrastructure of the network but also the organisational or business relationships between certain networked devices, for example the information that a particular computer terminal (404) is physically located on the same desk as an adjacent network telephone (406). This information allows the telephone or other associated networked devices to be automatically configured with a pre-defined profile of the user who will be sitting at that workstation. The invention enables delivery of an integrated IT service regardless of wherever the individual chooses to work within the office.

## Description

The present invention relates to a method and system for configuring network devices on a computer network particularly although not exclusively within the context of an office IT management system. The invention finds particular although not exclusive application in "hot-desking" environments, for example a flexible office arrangement using tetherless workstations.

There has been a growing need in recent years for office environments to become more flexible, with a move away from the traditional approach of each employee having his or her own individual desk, computer, telephone, printer and so on. In some categories and business sectors, desk occupancy in a traditional-style office can be less than 50% due to factors such as teleworking, employees working in other places (for example in meeting rooms), employees such as sales people working on the road, and sickness and holiday leave.

Office work has also changed since the office concept was first introduced for routine clerical tasks. People nowadays need a variety of settings in which to work effectively, for example a place for concentrated work, a place to network others, "brainstorming" areas, and informal and formal meeting places. The physical office environment may also be impacted by the need for employees to work together in ever-changing groups on individual tasks or projects, the length of which may be often measured in just weeks or months. Maintaining a traditional office structure, and using traditional IT management and network configuration tools, in such an environment becomes increasingly complex, time consuming and resource-intensive.

According to a first aspect of the present invention there is provided a system for configuring network devices on a computer network, comprising:
(a) a store, for storing a first relationship between a first network device and a first known point on the network, and a second relationship between a second network device and a second known point on the network;
(b) means for ascertaining from an external source a third relationship between the first and second network devices;
(c) a network probe for probing the network to check the continued validity of the first and second relationships; and,
(d) means for configuring one or both of the first and second network devices in dependence upon the third relationship when the first and second relationships have been confirmed as valid.

According to a second aspect of the invention there is provided a method for configuring network devices on a computer network, comprising:
(a) storing a first relationship between a first network device and a first known point on the network, and a second relationship between a second network device and a second known point on the network:
(b) ascertaining from an external source a third relationship between the first and second network devices;
(c) probing the network to check the continued validity of the first and second relationships, and, if one or both are no longer valid, re-ascertaining the third relationship from the external source; and
(d) configuring one or both of the first and second network devices in dependence upon the third relationship.

The system and method of the invention provides for quick and easy network device configuration, particularly although not exclusively within a hot-desking office environment. The system provides delivery of IT to users as a managed service (rather than as a series of individual components such as computer configuration, telephony configuration and so on). This reduces the complexity of IT administration within an office environment.

The invention in at least some embodiments delivers the IT service to wherever the individual chooses to work, making the invention useful in modern dynamic office environments. The invention supports the concept of time-shared office resources, where people no longer have their own desk and office resources (computer terminal, 'phone and so on); rather, they are allocated these on an as-needed basis in a location that best suits their work at the time. This also allows the organisation to "overbook" office accommodation - that is, to have fewer desks than people.

Where the office is being run at higher levels of utilisation (through "overbooking") and office space has been partitioned to provide a variety of work settings, the invention in at least some embodiments can provide accurate usage reporting to office facilities managers to enable them more effectively to balance individual needs against available resources.

Many routine IT processes can be labour intensive, for example the creation and deletion of user accounts as people start and end contracts, or start and end work on individual projects, and creating shared team resources like e-mail lists and shared network folders. The invention in at least some embodiments can help to reduce this complexity by automatically taking information from external computer systems such as human resources (personnel) systems, IT/networking databases and so on and providing automated configuration of all the elements of a work station with little or no additional user input.

Once two network devices have been associated together within the database (for example by the first user who sits at a workstation), the validity of that association is preferably assumed continuously valid unless and until the system detects either some change in one of the networked devices or some change in the networking infrastructure to which they are connected. In that way, the requesting of organisational information from users, or obtaining it from elsewhere, can normally be avoided, and the entire workstation with all its associated network devices automatically configured according to the user's profile as soon as the user logs on to the computer terminal.

The invention may take a variety of forms, and it extends not only to systems and methods for configuring network devices, but also to a computer network itself, a method and system for configuring or managing a network, and to an office IT management system.

The present invention may be carried into practice in a number of ways and one specific embodiment will now be described, by way of example, with reference to the accompanying drawings, in which:
Figure 1 is a system overview of the preferred embodiment;
Figure 2 is a logical overview of the preferred embodiment;
Figure 3 illustrates schematically the method of discovering and testing relationships;
Figure 4 shows an example office scenario;
Figure 5 illustrates the process of automated discovery;
Figure 6 illustrates the process of monitoring for change;
Figure 7 illustrates the user login process; and
Figure 8 illustrates the method of assuring the association of device to port.

The preferred embodiment is particularly applicable in a "hot-desking" office environment, in which there is a need for dynamic configuration of computers, IP telephones, printers and other network devices. Instead of an individual user having his or her own desk or workstation on which the network devices are permanently configured, in a "hot-desking" environment the user may need to be able to login to any computer, on any workstation, and have that computer automatically configured according to the user's personal profile. That much is, of course, conventional, but in the preferred embodiment when the user logs on to a computer at a particular workstation, the network telephone, network printer, network fax machine and/or other network devices at the workstation are configured automatically for that user, without any need for the user to configure them manually.

It will be understood that since all of the devices under discussion are network devices, each device is effectively separate and independent so far as the network is concerned and cannot determine, merely by probing the network, that for example a particular computer, telephone and printer are physically located on the same desk and will normally be used, together, by a user who is sitting at that desk. That information is essentially operational or business-related information, rather than traditional IT or network-related information.

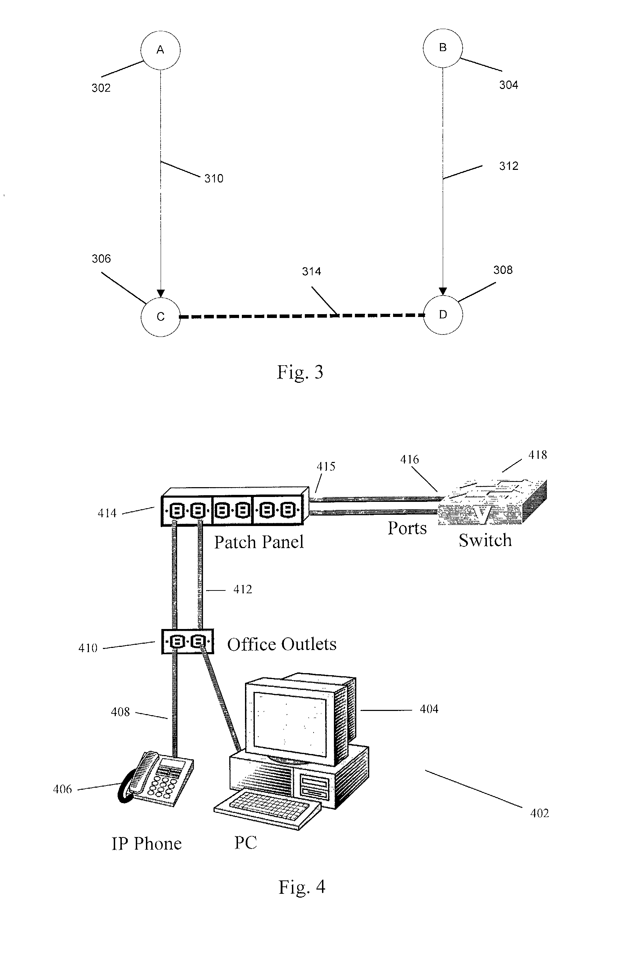

The preferred mechanism for achieving this may perhaps best be illustrated with reference to Figure 4, which shows part of an office "local area network" (LAN). A workstation generally indicated at 402 has, associated with it, a PC 404 and an IP (network) telephone 406. Both of these are linked via flexible cabling 408 to office outlets or sockets 410, which will typically be in the wall or floor of the office in which the workstation 402 is located. From there, the devices are coupled via (fixed) structural cabling 412 to a patch panel 414, which may typically be in a computer or comms room. Further cabling 415 couples this with the ports 416 of a switch, hub or router.

A user wishing to make use of the workstation 402 logs into the PC 404, which causes the user's profile to be retrieved across the network and for the PC to be configured accordingly. As will be described in more detail below, the system also has an awareness of the business or organisational relationship between the PC 404 and the 'phone 406 (that is, they are physically located on the same desk) and, on the basis of that relationship, the 'phone 406 can also be configured for that user, normally entirely automatically and without further user intervention. Typically, the configuration of the 'phone may consist of or include associated that 'phone with the user's individual personal telephone number, which follows him or her around the office whenever the user logs into a new workstation.

The simplified drawing of Figure 4 shows just a PC and a telephone as part of the workstation, but it should be understood that the invention is equally applicable to any other type of network device, including network faxes, scanners, printers, laptop computers, hand-held computers, cameras and so on. In addition to use with standard network telephony systems, the system may also be used with voice-over IP systems.

The way in which the system maintains a knowledge of the organisational or business link between the PC 404 and the 'phone 406 (i.e. that both form part of the workstation 402) will now be described with reference to Figure 3.

To start with, the system maintains a basis knowledge of two fixed points or basic entities A 302 and B 304, which are part of the fixed network infrastructure. In the example of Figure 4, the entities A, B may correspond for example with the ports 416 on the switch 418. By interrogating the network, starting at those points, the system can automatically discover the network devices or entities C 306 and D 308 to which they are coupled via the network. In figure 4, the entity C may represent the 'phone 406, and the entity D the PC 404. The entities C and D need to be considered as not necessarily being fixed, since in any office environment there may frequently be a need to move network devices around, upgrade PCs, replace broken equipment and so on.

Once the entities C and D have been automatically discovered, the system stores the corresponding relationship A-C 310 and B-D 312 with a database for future reference. These relationships 310,312 can of course be automatically tested at any time simply by interrogating the network, starting at the points A and B and checking whether they still remain coupled to the network devices C and D.

An organisational or business relationship 314 between the network devices C and D will typically be some relationship which cannot automatically be discovered by probing the network, but which requires external input. In the example of Figure 4, the organisational relationship is that the two devices are physically located on the same desk, or are associated with the same workstation. In other environments, there may be some more general spatial link, for example that the two devices are located within the same room or (where this cannot otherwise be determined from the network cabling) on the same floor of a building. The relationship does not necessarily need to be spatial: it will be quite possible for example for a desktop CAD system to be logically associated with a remote network plotter if that plotter is always used to print engineering drawings designed at that particular machine.

Since the relationship 314 cannot be discovered by interrogating the network, it has to be provided from some external source which is aware of the particular organisational or other logical link between the two devices. In the embodiment of Figure 4, the relationship between the PC 404 and the 'phone 406 may be ascertained by prompting a user who has just logged in to the PC to specify (e.g. by unique reference number or other identifier) what other network devices there are at the same workstation or on the same desk. Alternatively, the relationships could be derived from another external source (not shown) which maintains a database of the organisational or business rules that are applicable within the office environment. For example, if the office has two types of standardised workstations, "managerial" and "clerical", and the user has logged on to a managerial-type computer, the system may be able to assume, without specifically asking the user, that the 'phone on that workstation is also of the managerial-type. Furthermore, it can be determined from the networked topology that there is only one managerial-type 'phone on that particular floor, then it can safely be assumed that that 'phone must be on the same workstation as the computer that has just been logged into.

Once the relationship 314 has been determined for the first time, the system assumes that that relationship remains valid unless and until either or both of the relationships 310, 312 change. Thus, when a new user logs onto the PC 404, the system does not need to ask again for details of the 'phone 406 provided that neither the computer nor the 'phone, nor their corresponding ports 416, have changed since the corresponding relationships 310, 312 were last checked. In that way, the user is prompted to enter information about other network devices at the workstation only when there has been some change in the devices themselves, or in the networking infrastructure, since the relationships were last defined.

The system repeatedly interrogates the network to check the continuing validity of the relationships 310, 312, and flags any relationships that have changed. The system then attempts to redefine the organisational relationships 314 by seeking, when applicable, input from one or more external sources. The checking of the relationships 310, 312 may be either effected by means of a timed process, or by means of one or more triggers, such as a user logging onto a PC.

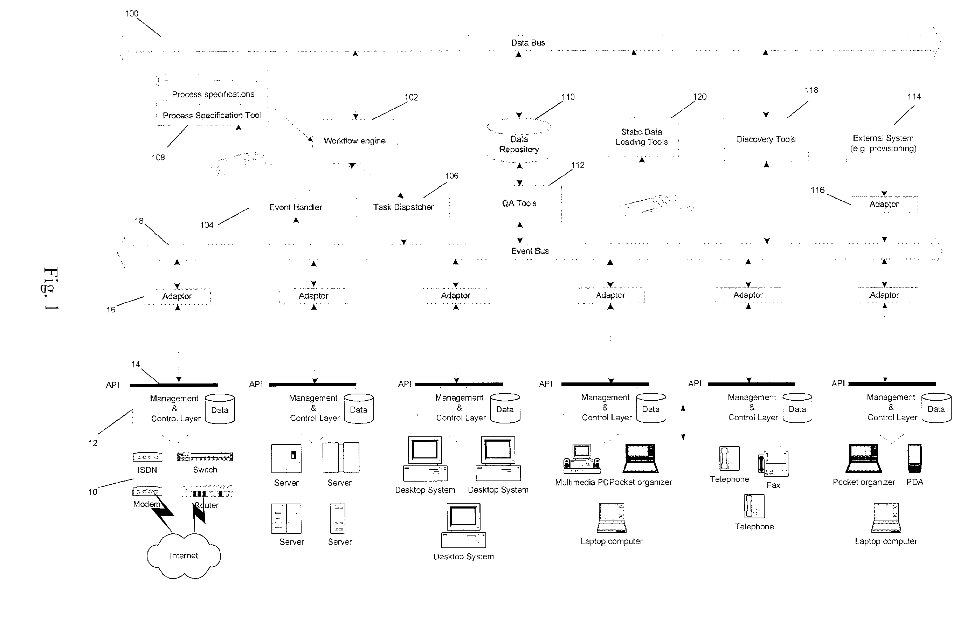

Having set out the general principles, some more details of the preferred embodiment will now be described, starting with Figure 1 which is a schematic illustration of the system of the preferred embodiment.

A variety of individual network devices generally indicated by the reference numeral 10 are connected together into a computer network. Each device or group of devices communicates with the network via a management and control layer 12, an API 14 and an adaptor 16, which converts information from the devices into a common form (e.g. XML) for placing on an event bus 18. Data is transmitted across the network by means of a data bus 100.

The heart of the system is a workflow or rules engine 102 which receives incoming system events from the event bus 18 via an event handler 104 and which dispatches system tasks by means of a task dispatcher 106. The workflow engine 102 operates according to one or more process specifications which can be configured, as required by a system administrator by means of a process specification tool 108.

The workflow engine 102 makes decisions on the basis of information stored within a data repository 110. For example, when a user logs into a PC, the workflow engine may dispatch a login event via the task dispatcher 106 to the relevant PC. It then sets off the relevant business process needed to set the workstation up properly, which may include configuring for example a telephone and a printer. To do that, it needs to know which 'phone and which printer is located at that particular workstation, and it also needs to know the personal telephone number used by the user in order to configure the PBX. If the system is aware that the relationships 310, 312 (Figure 3) have changed, the workflow engine will dispatch a task to obtain that information, either from the user possibly via some external system 114. The external system 116 also communicates with the event bus 18 via an adaptor 116, the purpose of which is to translate from the format used by the external system to the format used on the event bus.

When information is retrieved from the data repository 110, it passes through a QA tools process 211 which checks the integrity of the data and advises the workflow engine 102 which links are "broken" and hence need to be checked.

Discovery tools 118 run when necessary and interrogate the network to check the links 310, 312 (Figure 3). As previously mentioned, automated discovery may take place at regular timed intervals or, alternatively, only when deemed necessary (for example when a user logs on). Also included within the discovery tools 118 are the prompted discovery routines needed when user prompts are required to discover the link 314 (Figure 3). All of the discovery tools are controlled by the workflow engine 102, and are dispatched as individual tasks by the task dispatcher 106.

Static data loading tools 120 are provided to allow a system administrator manually to enter data into the data repository 110 (for example details of new people joining the Company, changes in network topology and so on). Alternatively, or in addition, communication may be permitted with an external system 114, the purpose of which is to allow the data repository 110 to be updated automatically without too much manual intervention. Possible external systems include a Company HR (Human Resources) system, network management systems and so on.

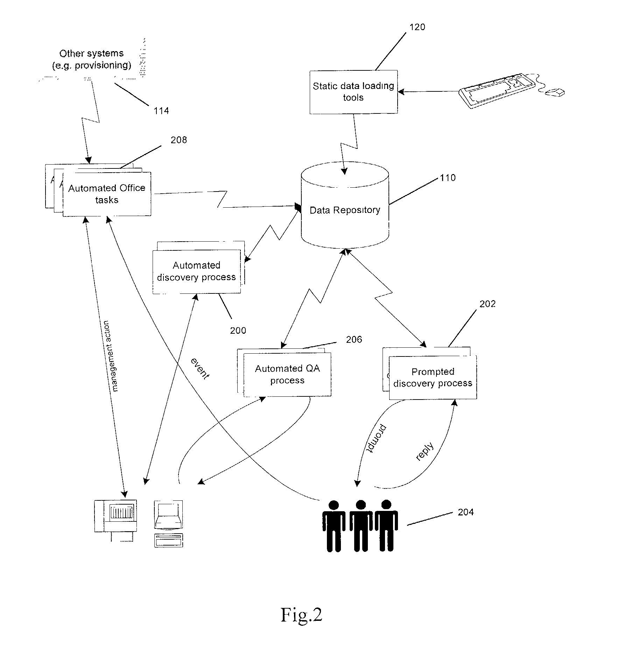

Figure 2 is a schematic view of the processes that manage the quality of information in the data repository 110.

In an initial phase, the static data loading tools 120 are used to enter the basic data into the databases. This will typically be information which the system relies on as "unchanging" whilst in-service. Examples of such static information might include location (room, desk and so on), network switchers, routers, hubs and structured cabling. Any changes (such as a new LAN switch) must be manually updated in the system.

Automated discovery processors 200 run using that basic information as a starting point, and attempt to discover other devices and relationships (e.g. 310, 312, 306 and 308 in Figure 3) by direct probing.

Prompted discovery processes 202 are processes that gather information which cannot be determined by direct probing. In this embodiment, users 204 are asked to input data.

Once the system is operational, automated QA (Quality Assurance) processes 206 monitor the system for any changes that may compromise the accuracy of information in the database. This process has already been described in some detail with reference to Figure 3.

Automated office tasks 208 are the IT operations that have been automated for the office environment (for example the automated tasks that need to be performed when a user moves from one desk to another). Input may be derived from external systems 114, such as external HR systems. Changes in the office environment are reflected back into the data repository 110, enabling the system to produce up to date and accurate IT and business reports.

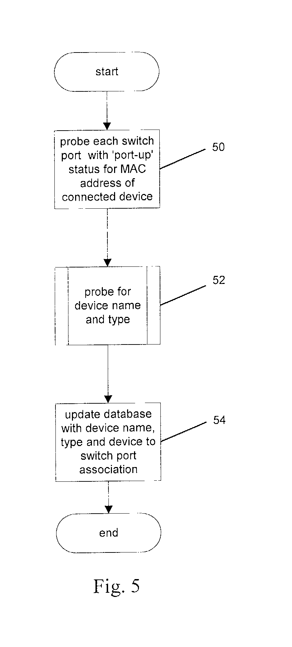

The flowcharts of Figures 5 to 8, to be described below, give an overview of how knowledge management is realised for a scenario where a PC and an IP (network) telephone are associated by being both located on the same desk, with this knowledge then being used for personal number configuration of the telephone at user login time. In IP telephony environment, telephone numbers are linked to telephones (this is different from the normal 'phone, where the number is associated with the outlet), so maintaining the location relationship between the telephone and the PC is paramount in order to be able to deliver a personal number to the desk automatically.

In this example, the static knowledge inserted by an administrator is an identifier (for example an IP address) of the switch in the comms room that serves the office. Thus, it is known a priori, that all network devices in the office go through that switch.

Starting from this knowledge, Figure 5 schematically illustrates the automated discovery process. At step 50, each switch port is probed with "port-up" status for the MAC address of any connected device. At step 52, a probe is then made, against each port, for the device name, type and identifier. Finally, at step 54, the database is updated with the device information, and also information of the association or link between the specific device and one of the ports on the switch.

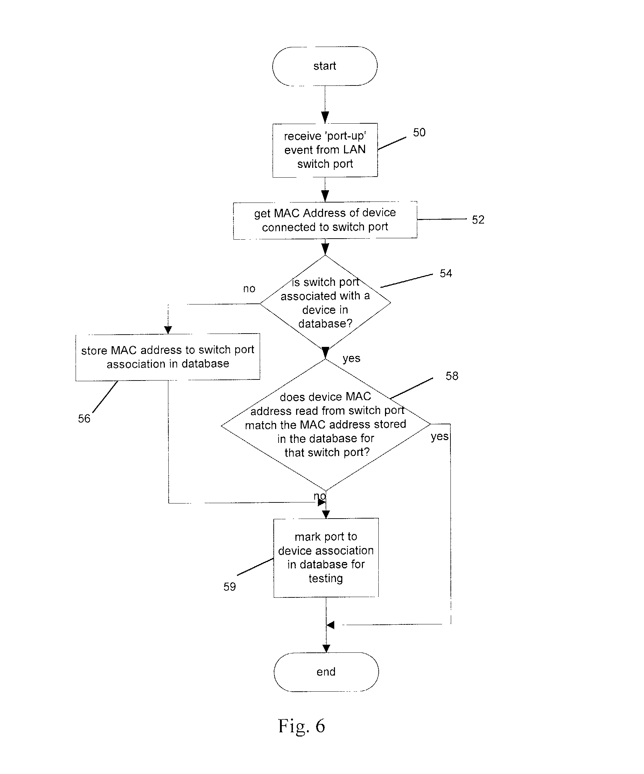

Figure 6 illustrates an automated QA process that recognises and records office changes, and updates the database accordingly. The checking procedure starts at step 50 when a "port-up" event from the LAN switch port is received (this is typically generated by an SNMP trap set on the LAN switch), which indicates that the device connected to that port may have changed. Next, at step 52, the MAC address of the device which is connected to the switch port is obtained. As is well known, the MAC address is a globally unique identifier for a network device.

Once the MAC address has been obtained, a check is made at step 54 to see whether the switch port is associated with a device which has been recorded in the database. If not, there is an unknown MAC address on the port. This indicates that the port to device relationship may have changed. The MAC address to switch port associations is then stored at step 56, and the association is then marked at step 59 for future testing. The testing could be done either immediately or later: this algorithm does not prescribe specific timing.

If at step 54 the system finds that the switch port is already associated with a device in the database, a check is made to see whether device MAC address which has been read from the switch port matches the MAC address which is stored in the database for that switch port. If there is a match, the algorithm ends there. If not, there has been some change, and the association is marked at step 59 for testing.

If the LAN switch port is of a type unable to generate "port-up" events automatically, the LAN ports could instead be repeatedly polled.

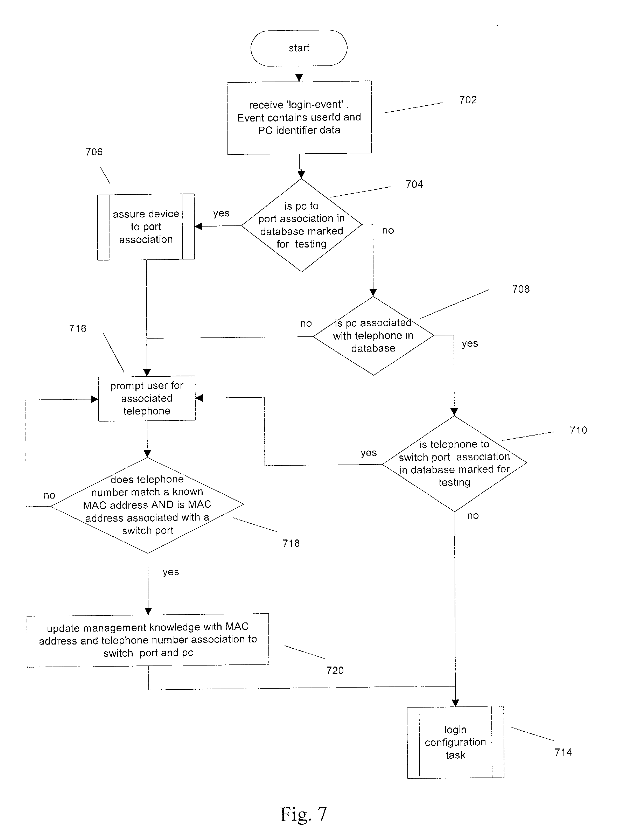

Figure 7 shows what happens when a user logs on to the system. A number of tests are performed in order to validate the knowledge that is required to set up the personalised workspace. All the knowledge marked as "requiring further testing" is then gathered (either automatically, or by prompting the user to input the specific information). Once the required knowledge about the office environment has been obtained (either through the automated QA process 206 or through the prompted discovery process 202 of Figure 2) the personalised workspace is delivered to the user.

Specifically, the system first receives a login-event at step 202, containing user ID and PC identifier information. At step 704, a check is made to see whether the PC to port association within the database is marked for testing. If it is so marked, a process is run to assure that association in step 706.

Once the PC to port association has been assured, a check is made at step 708 to see whether there is any organisational relationship within the database between the PC and a telephone. If there is, a check is made at 710 as to whether the telephone to switch port association has been marked for testing. If not, both the PC and the telephone can be configured at step 714 according to the user's profile. If the telephone to switch port association has been marked for testing, that association is tested and assured at step 712 before configuration starts.

If at step 708 it is found that within the database the PC is not associated with any particular telephone, a user prompt is issued at step 716, for example requesting details of the telephone which is sitting on the same desk as the PC. Once that information has been entered, a check is made to see whether the telephone number matches a known MAC address and whether that MAC address is already associated in the database with a switch port. If the answer is No, a further prompt is issued to the user. If the answer if Yes, the database is updated at step 720 with the MAC address, and also with the association between the telephone and the PC. Configuration of the telephone and of the PC to the user's profile can then start at step 714.

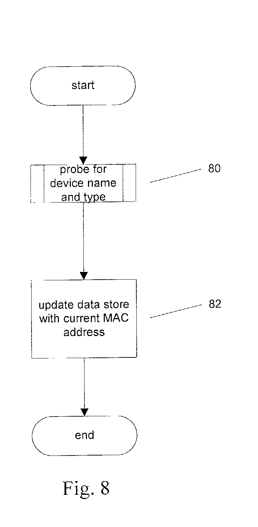

Figure 8 illustrates the "assure device to port association" QA procedure (previously mentioned at steps 706 and 712 in Figure 7). This procedure checks if the location of a certain device is accurately reflected in the database. It is preferably implemented as a separate procedure to allow for timing flexibility: depending upon the specific scenario, the required validation can be performed at any convenient time. In the example just described, validation is carried out at login time.

At step 80, a probe is carried out for the device name and type. Typically, this will use a standard protocol such as SNMP, or alternatively a proprietary management protocol such as WMI, supplied by Microsoft Corporation. A check is then made at step 82 as to whether the type and name match the information stored in the database. If there is a match, the likely reason is that the network card or the whole device has been replaced, and all the system then needs to do, at step 84, is to update the database with the new MAC address.

If the check at step 82 fails, the user is then prompted at step 86 (via an input screen on the PC) to enter an associated telephone number. Checks are then performed on that number to ensure that it is correct. These steps - 88 and 89 - are the same as steps 718, 720 already described in relation to Figure 7.

The system as described makes use of switch ports 416 (Figure 4) as the "fixed points" 302, 304 (Figure 3) within the network. It will however be understood that other fixed points within the network could equally well be used, provided that they can report their own status or alternatively be polled. Suitable fixed points include the ports of any fixed network device such as a hub, gateway, switch, router, server or any other network device that can be assumed to be fixed. Other possibilities include defining the fixed points by means of the structural wiring: possibilities include patch panel outlets and office outlets, where these can either report their own status or be polled.

The invention is equally applicable to wireless networks, provided of course that some fixed point (such as an access point) can be defined to act as the fixed entities A, B of Figure 3. In a wireless LAN environment, the system will typically know which hub is being used as the access point for each wireless network device and, in at least some applications, that will be sufficient for realistically useful organisational links 314 (Figure 3) to be defined and maintained within the database.

## Claims

1. A system for configuring network devices on a computer network, comprising:
(a) a store (110), for storing a first relationship (312) between a first network device (308) and a first known point (304) on the network, and a second relationship (310) between a second network device (306) and a second known point (302) on the network;
(b) means for ascertaining from an external source a third relationship (314) between the first and second network devices;
(c) a network probe for probing the network to check the continued validity of the first and second relationships; and,
(d) means for configuring one or both of the first and second network devices in dependence upon the third relationship when the first and second relationships have been confirmed as valid.

2. A system as claimed in claim 1 in which the first (304) and second (302) known points on the network are ports of a network device assumed to be fixed.

3. A system as claimed in claim 2 in which the first (304) and second (302) known points are ports (416) on a switch.

4. A system as claimed in claim 1 in which the first (304) and second (302) known points are probeable points within a structured cabling portion of the network.

5. A system as claimed in claim 1 in which at least one of the first (308) and second (306) network devices is a wireless device communicating with a fixed portion of the network via an access point, at least one of the first and second known points being defined by the access point.

6. A system as claimed in any one of the preceding claims in which the third relationship (314) is representative of an organizational or business association between the first (308) and second (306) network devices.

7. A system as claimed in any one of claims 1 to 3 in which the third relationship (314) is representative of a spatial association between the first (308) and second (306) network devices.

8. A system as claimed in claim 7 in which the third relationship (314) is representative of the fact that the first (308) and second (306) network devices are part of a common workstation (402), or are located on the same desk.

9. A system as claimed in claim 7 in which the third relationship (314) is representative of the fact that the first (308) and second (306) network devices are located in the same room.

10. A system as claimed in claim 7 in which the third relationship (314) is representative of the fact that the first (308) and second (306) network devices are located for use by a common user.

11. A system as claimed in any one of the preceding claims in which the means for ascertaining the third relationship (316) includes prompting means for requesting details of the second network device from a user or intended user of the first network device (404).

12. A system as claimed in any one of claims 1 to 10 in which the means for ascertaining the third relationship (314) includes means for receiving organisation information from an external computer system (114).

13. A system as claimed in any one of the preceding claims in which the first network device (308) is a computer terminal (404), and the second network device (306) is a network telephone (406).

14. A system as claimed in claim 13 in which the means for configuring includes means for associating a personal telephone number of a user or intended user of the computer terminal (404) with the network telephone (406).

15. A system as claimed in any one of the preceding claims in which the network probe repeatedly and automatically checks the continued validity of the first (312) and second (310) relationships.

16. A system as claimed in any one of claims 1 to 14 in which the network probe checks the continued validity of the first (312) and second (310) relationships on receipt of a notification that a user wishes to use the first (308) or the second (306) network device.

17. A method for configuring network devices on a computer network, comprising:
(a) storing a first relationship (312) between a first network device (308) and a first known point (304) on the network, and a second relationship (310) between a second network device (306) and a second known point on the network:
(b) ascertaining from an external source a third relationship (314) between the first and second network devices;
(c) probing the network to check the continued validity of the first and second relationships, and, if one or both are no longer valid, re-ascertaining the third relationship (314) from the external source; and
(d) configuring one or both of the first and second network devices in dependence upon the third relationship.
